# EUROPÄISCHE PATENTSCHRIFT

(11) **EP 0 583 684 B1**
(45) Veröffentlichungstag und Bekanntmachung des Hinweises auf die Patenterteilung: **22.11.1995**
(21) Anmeldenummer: 93112480.4
(22) Anmeldetag: 04.08.1993
(51) Int. Cl.: E01D 19/12, E01C 11/24

(54) **Tragplatte für Brücken und Rampen**
Supporting plate for bridges and ramps
Plaque de support pour ponts et rampes

(30) Priorität: 19.08.1992 DE 4227381
(43) Veröffentlichungstag der Anmeldung: 23.02.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 004 518
- EP-A- 0 223 147
- DE-A- 1 659 903
- US-A- 2 322 965

## Beschreibung

Die Erfindung betrifft eine Tragplatte für eine Fahrbahn und/oder Gehfläche aufweisende Brücken oder Rampen, insb. für Schrägrampen, mit zu beiden Seiten angeordneten Längsträgern, die durch eine Vielzahl einander paralleler, ebene Fahrbahn- bzw. Gehflächen aufweisender Profile, insb. Hohlprofile, verbunden sind. Insb. soll sich die Erfindung jedoch auf solche Tragplatten beziehen, die beim Gebrauch ansteigend benutzt werden.

Bei bekannten Tragplatten dieser Art (EP-A-0 223 147) sind die Profile so ausgeführt, daß die ebenen Fahrbahnabschnitte die Fahrbahn- und Gehflächenebene bestimmen, also mit fluchtenden Fahrbahnabschnitten versehen sind. Bei diesen Tragplatten besteht jedoch die Gefahr, daß sie für größere Steigungen nicht mehr benutzt werden können, und zwar auch dann nicht, wenn die Fahrbahnabschnitte mit einem rutschhemmenden Belag versehen sind.

Der Erfindung liegt die Aufgabe zugrunde, die eingangs erwähnten Tragplatten so auszubilden, daß sie für Steigungen benutzbar sind und dabei eine ausreichend große Rutschsicherheit bieten.

Zur Lösung dieser Aufgabe sind erfindungsgemäß die Fahrbahn- oder Gehfläche der Profile im Winkel zur Längsrichtung der Tragplatte angeordnet und die Fahrbahn- oder Gehflächen benachbarter Profile stufenartig gegeneinander höhenversetzt.

Die Profile bzw. ihre Fahrbahnabschnitte werden somit bewußt nicht auf die Längsrichtung der Tragplatte ausgerichtet, sondern unter einem kleinen Anstellwinkel angebracht, wobei dann aufeinanderfolgende Profile stufenartig zueinander verlaufen. Dadurch ergibt sich gewissermaßen eine sägezahnartige Profilierung (bei Betrachtung der Tragplatte quer zur Verkehrsrichtung). Damit erhöht sich die Griffigkeit der Tragplatte erheblich, und nunmehr finden die Fahrzeugräder einen ausreichenden Halt auf der Fahrbahn, was sinngemäß auch für Fußgänger zutrifft.

Weitere Einzelheiten der Erfindung werden anhand der Zeichnung erläutert, in der ein Ausführungsbeispiel der Erfindung dargestellt ist.

Es zeigen:

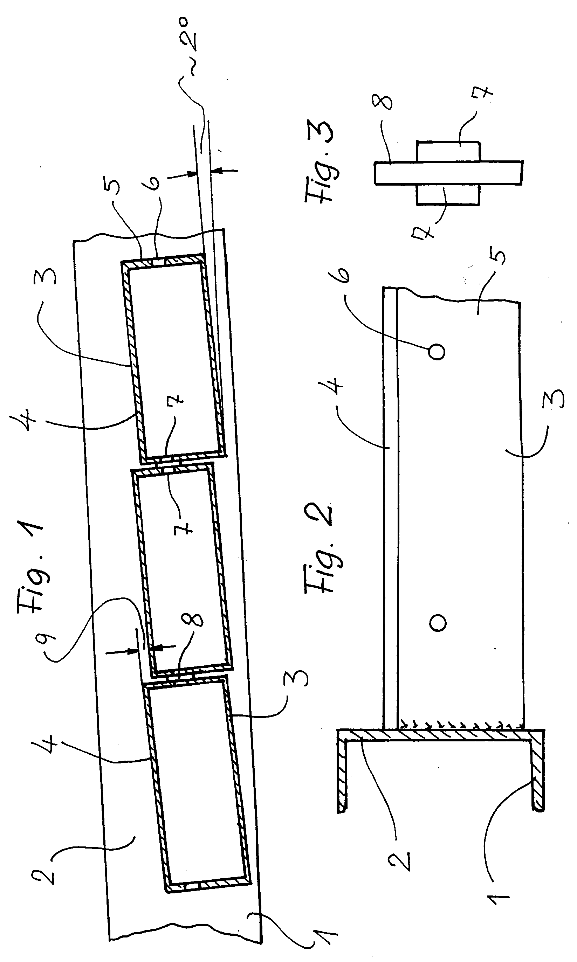

- Fig. 1: eine Teillängsschnitt durch eine Schrägrampe, die verfahrbar ausgeführt sein kann,
- Fig. 2: einen Teilquerschnitt durch die Rampe gemäß Fig. 1 und
- Fig. 3: ein Verbindungselement für benachbarte Profile für die Rampe gemäß Fig. 1 und 2.

Zu beiden Seiten ist die Rampe mit einem Längsträger 1 versehen, der als U-Eisen ausgeführt ist. Sein senkrechter Steg ist mit 2 bezeichnet. Zwischen den Stegen 2 der beiden Längsträger 1 sind senkrecht dazu und quer zur Verkehrsrichtung der Rampe geschlossene Profile 3 angeordnet, die als Hohlprofile mit rechteckigem Querschnitt ausgebildet sind. Die oben gelegene Wandung 4 bildet die zum Befahren bzw. Begehen dienende Fläche und somit einen Fahrbahnabschnitt, der auch mit rutschhemmenden Belägen versehen sein kann, insb. im Falle einer Stahlkonstruktion. Die Profile 3 erstrecken sich somit über die gesamte Breite der Fahrbahn bzw. des Gehweges. Erwähnt sei, daß die Breite der Profile 3 etwa 140 mm und deren Höhe etwa 80 mm beträgt.

Die Enden der Profile 3 werden mit den Längsträgern 1 verschweißt, untereinander haben die Profile 3 jedoch eine andere, nämlich eine formschlüssige Verbindung unter Verwendung eines Zwischengliedes gemäß Fig. 3.

Dazu sind die Seitenschenkel 5 der Profile 3 mit Bohrungen 6 versehen, und zwar so, daß die auf der einen Seite des Profils 3 befindlichen Bohrungen 6 von der Wandung 4 einen anderen Abstand haben im Vergleich zu den gegenüberliegenden Bohrungen 6. In diese Bohrungen 6 greifen die Stummel 7 des Zwischengliedes gemäß Fig. 3 praktisch spiellos ein, während die zwischen den beiden fluchtenden Stummeln 7 befindliche Scheibe 8 den gegenseitigen Abstand der Profile 3 bestimmt. Dadurch sind die Profile ausreichend, insb. schubfest miteinander verbunden.

Durch die unterschiedliche Höhenlage der Bohrungen 6 sind benachbarte Profile 3 gegeneinander versetzt. Der Versatz ist mit 9 bezeichnet, er kann 2 - 10 mm betragen. Dadurch steigt jeder Fahrbahnabschnitt bzw. Wandung 4 um etwa 1 - 4° gegenüber den Längsträgern 1 an, die die Längsrichtung der Tragplatte bestimmen. Vorzugsweise wählt man jedoch etwa 4 - 5 mm für den Versatz 9. Der Anstieg der Fahrbahnabschnitte gegenüber den Längsträgern beträgt dann etwa 2°. Der Anstieg der Fahrbahnabschnitte ist dabei in vorteilhafter Weise so orientiert, daß bei Benutzung der Tragplatte in Schrägstellung die Fahrbahnabschnitte und die Längsrichtung der Rampe gleichsinnig schräg verlaufen.

Der gegenseitige Abstand der Profile 3 hat den Vorteil, daß hierüber Wasser abfließen bzw. Erdreich od. dgl abgeführt werden kann. Bei einer vorteilhaften Ausführungsform der Erfindung hat der gegenseitige Abstand der Profile etwa die gleiche Größe wie der Höhenversatz 9 benachbarter Profile 3. Die Profile 3 können an einem Schenkel 5 Bohrungen 6 mit größerem Abstand haben im Vergleich zum Abstand am anderen Schenkel 5.

## Patentansprüche

1. Tragplatte für eine Fahrbahn und/oder Gehfläche aufweisende Brücken oder Rampen, insb. für Schrägrampen, mit zu beiden Seiten angeordneten Längsträgern (1), die durch eine Vielzahl einander paralleler, ebene Fahrbahn- bzw. Gehflächen aufweisender Profile, insb. Hohlprofile, verbunden sind, dadurch gekennzeichnet, daß die Fahrbahn- oder Gehfläche der Profile (3) im Winkel zur Längsrichtung der Tragplatte angeordnet ist und die Fahrbahn- oder Gehflächen benachbarter Profile (3) stufenartig gegeneinander höhenversetzt sind.

2. Tragplatte nach Anspruch 1, dadurch gekennzeichnet, daß der Höhenversatz etwa 2 - 10 mm beträgt.

3. Tragplatte nach Anspruch 2, dadurch gekennzeichnet, daß der Höhenversatz etwa 4 - 5 mm beträgt.

4. Tragplatte nach Anspruch 1, dadurch gekennzeichnet, daß benachbarte Profile (3) mit gegenseitigem Abstand angeordnet sind.

5. Tragplatte nach Anspruch 1, dadurch gekennzeichnet, daß die einander zugekehrten Schenkel (5) benachbarter Profile (3) Ausnehmungen (Bohrungen 6) zum Eingriff von lose eingelegten Verbindungselementen aufweisen, wobei die Ausnehmungen benachbarter Schenkel von der Fahrbahn- oder Gehfläche der Profile (3) einen unterschiedlichen Abstand haben.

6. Tragplatte nach Anspruch 4 und 5, dadurch gekennzeichnet, daß die in die Ausnehmungen (6) eingreifenden Teile der Verbindungselemente fluchtende Stummel (7) sind, die zu beiden Seiten eines scheibenartigen Distanzkörpers (8) angeordnet sind.

7. Tragplatte nach Anspruch 1, dadurch gekennzeichnet, daß die Fahrbahn- oder Gehflächen der Profile (3) um etwa 1 - 4° gegenüber der Längsrichtung der Tragplatte ansteigen.

8. Tragplatte nach Anspruch 7, dadurch gekennzeichnet, daß der Anstieg etwa 2° beträgt.

9. Tragplatte nach Anspruch 1 und 5, dadurch gekennzeichnet, daß der Höhenversatz dem unterschiedlichen Abstand entspricht.

10. Tragplatte nach Anspruch 5, dadurch gekennzeichnet, daß die Profile (3) an einem Schenkel (5) Ausnehmungen (6) mit größerem Abstand haben im Vergleich zum Abstand am anderen Schenkel (5).

11. Tragplatte nach Anspruch 1, dadurch gekennzeichnet, daß bei Benutzung der Tragplatte in Schrägstellung die Fahrbahn- oder Gehfläche der Profile (3) und die Längsrichtung der Profile gleichsinnig schräg angeordnet sind bzw. verlaufen.

## Claims

1. Supporting plate for bridges or ramps provided with a roadway and/or pedestrian surface, especially for inclined ramps, including longitudinal carrier members (1), which are disposed on both sides and are connected by a plurality of profiles, for example hollow profiles, which lie parallel to one another and have flat roadway or pedestrian surfaces, characterised in that the roadway or pedestrian surfaces of the profiles (3) are disposed at an angle relative to the longitudinal direction of the supporting plate, and the roadway or pedestrian surfaces of adjacent profiles (3) are vertically offset from one another in a step-like manner.

2. Supporting plate according to claim 1, characterised in that the vertical offset arrangement is substantially 2 - 10 mm.

3. Supporting plate according to claim 2, characterised in that the vertical offset arrangement is substantially 4 - 5 mm.

4. Supporting plate according to claim 1, characterised in that adjacent profiles (3) are disposed with a mutual spacing therebetween.

5. Supporting plate according to claim 1, characterised in that the side walls (5) of adjacent profiles (3), facing each other, have recesses (bores 6) for the engagement of loosely inserted connection elements, the recesses of adjacent side walls being differently spaced from the roadway or pedestrian surfaces of the profiles (3).

6. Supporting plate according to claims 4 and 5, characterised in that the parts of the connection elements which engage in the recesses (6) are aligned stubs (7), which are disposed on both sides of a disc-like spacer member (8).

7. Supporting plate according to claim 1, characterised in that the roadway or pedestrian surfaces of the profiles (3) ascend through substantially 1 - 4° relative to the longitudinal direction of the supporting plate.

8. Supporting plate according to claim 7, characterised in that the upward inclination is substantially 2°.

9. Supporting plate according to claims 1 and 5, characterised in that the vertical offset arrangement corresponds to the variable spacing.

10. Supporting plate according to claim 5, characterised in that the profiles (3) at one side wall (5) have recesses (6) with a greater spacing compared with the spacing at the other side wall (5).

11. Supporting plate according to claim 1, characterised in that, when the supporting plate is used in its inclined position, the roadway or pedestrian surfaces of the profiles (3) and the longitudinal direction of the profiles are disposed or extend inclinedly in the same direction.

## Revendications

1. Tablier de pont ou quai, notamment de rampe, qui ont une chaussée et/ou une surface sur laquelle on marche, comprenant des longerons (1) disposés des deux côtés et qui sont reliés par une multiplicité de profilés, notamment de profilés creux, parallèles entre eux et ayant une chaussée plane ou des surfaces planes sur lesquelles on marche, caractérisé en ce que la surface de la chaussée ou la surface des profilés (3) sur laquelle on marche fait un angle avec la direction longitudinale du tablier et que les surfaces de chaussée ou les surfaces de profilés (3) voisins sur lesquelles on marche sont décalées mutuellement en hauteur d'une manière étagée.

2. Tablier suivant la revendication 1, caractérisé en ce que le décalage en hauteur est égal à environ 2 à 10 mm.

3. Tablier suivant la revendication 2, caractérisé en ce que le décalage angulaire est compris approximativement entre 4 et 5 mm.

4. Tablier suivant la revendication 1, caractérisée en ce que les profilés voisins (3) sont disposés à une certaine distance mutuelle.

5. Tablier suivant la revendication 1, caractérisée en ce que les branches (5), tournées l'une vers l'autre, de profilés voisins (3) comportent des ouvertures (perçages 6) permettant l'engagement d'éléments de liaison insérés de façon lâche, les évidements de branches voisines étant à une distance différente de la surface de la chaussée ou de la surface des profilés (3) sur laquelle on marche.

6. Tablier suivant la revendication 4 ou 5, caractérisé par le fait que les parties, qui s'engagent dans les ouvertures (6), des éléments de liaison sont des embouts alignés (7), qui sont disposés des deux côtés d'une pièce d'entretoisement en forme de disque (8).

7. Tablier suivant la revendication 1, caractérisé par le fait que les surfaces de chaussée ou les surfaces des profilés (3) sur lesquelles on marche s'élèvent d'environ 1 à 4° par rapport à la direction longitudinale du tablier.

8. Tablier suivant la revendication 7, caractérisé par le fait que l'angle d'élévation est d'environ 2°.

9. Tablier suivant les revendications 1 et 5, caractérisé par le fait que le décalage en hauteur correspond à la distance différente.

10. Tablier suivant la revendication 6, caractérisé par le fait que les profilés (3) situés sur une branche (5) possèdent des ouvertures (6) séparées par une intervalle supérieur à l'intervalle des ouvertures présentes dans l'autre branche (5).

11. Tablier suivant la revendication 1, caractérisé par le fait que, dans le cas de l'utilisation du tablier en position inclinée, la surface de chaussée ou la surface des profilés (3) sur laquelle on marche et la direction longitudinale des profilés sont disposées ou s'étendent obliquement dans le même sens.
